# EUROPEAN PATENT APPLICATION

(11) **EP 4 571 600 A1**
(43) Date of publication of application: **18.06.2025**
(21) Application number: 22953380.7
(22) Date of filing: 09.08.2022
(51) Int. Cl.: G06N 20/00, G06F 30/23, G06F 30/27

(54) **DEFECTIVE LOCATION OUTPUT METHOD AND DEFECTIVE LOCATION OUTPUT DEVICE**

(71) Applicant: NISSAN MOTOR CO., LTD., Kanagawa 221-0023 (JP)
(72) Inventor: MIYAGAWA, Naoki, Atsugi-shi, Kanagawa 243-0123 (JP)
(74) Representative: Global IP Europe Patentanwaltskanzlei
(86) International application number: PCT/JP2022/030418
(87) International publication number: WO 2024/034010

(57) **Abstract**

A controller (10) performs: calculating a feature amount of target mesh data to be subjected to an analysis process, which is created by converting three-dimensional shape data, based on nodes and links constituting the target mesh data; inputting the feature amount of the target mesh data to a trained model as input data; and outputting a part or a location with a defective portion requiring correction in the target mesh data using the trained model. The trained model is trained using teaching data which associates a part or a location with a defective portion in training mesh data in which a defective portion has already been identified with a feature amount of the training mesh data when a defective portion occurs in the training mesh data.

## Description

### Technical Field

The present invention relates to a defective location output method and a defective location output device.

### Background Art

There has been known a technique in which a three-dimensional model for analysis is generated by dividing a three-dimensional model based on three-dimensional CAD data into a grid, and the differences in volume, surface area, and barycenter position between the three-dimensional model based on the three-dimensional CAD data and the three-dimensional model for analysis are obtained and displayed to an operator (Patent Document 1).

### Prior Art Document

### Patent Document

Patent Document 1: JP 2004-94663 A

### Summary of Invention

### Problems to be Solved by Invention

However, in the technique of Patent Document 1, a portion requiring correction in the three-dimensional model for analysis is not displayed. Therefore, the problem is that the operator needs to visually check the three-dimensional model for analysis to identify the portion requiring correction, and thus the three-dimensional model for analysis cannot be efficiently corrected.

A problem to be solved by the present invention is to provide a defective portion output method and a defective portion output device which can efficiently correct a three-dimensional model for analysis.

### Means for Solving Problems

The present invention solves the above-described problem by: calculating a feature amount of target mesh data to be subjected to an analysis process, which is created by converting three-dimensional shape data, based on nodes and links constituting the target mesh data; inputting the feature amount of the target mesh data to a trained model as input data; and outputting a part or a location with a defective portion requiring correction in the target mesh data using the trained model. The trained model is trained using teaching data which associates a part or a location with a defective portion in training mesh data in which a defective portion has already been identified with a feature amount of the training mesh data when a defective portion occurs in the training mesh data.

### Effects of Invention

According to the present invention, a three-dimensional model for analysis can be efficiently corrected.

### Brief Description of Drawings

FIG. 1 is a block diagram illustrating a schematic configuration of a defective portion output device according to an embodiment of the present invention.
FIG. 2 is a diagram illustrating an example in which the defective portion output device according to the embodiment is applied.
FIG. 3 is a diagram illustrating an example of an output result of a defective portion according to the embodiment.
FIG. 4 is a flowchart illustrating an exemplary procedure of a learning method of a machine learning model according to the embodiment.
FIG. 5 is a flowchart illustrating an exemplary procedure of a defective portion output method according to the embodiment.
FIG. 6 is a flowchart illustrating an exemplary procedure of the defective portion output method according to the embodiment.

### Mode(s) for Carrying out the Invention

Hereinafter, an embodiment of the present invention will be described with reference to the drawings.

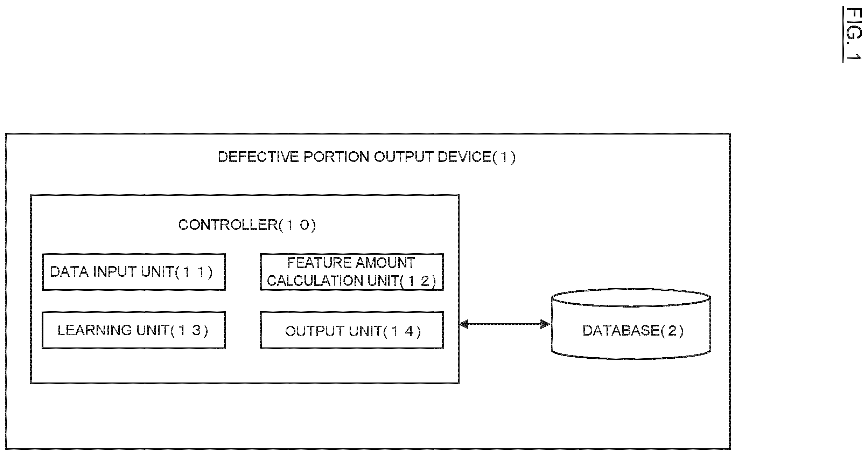

FIG. 1 is a block diagram illustrating a schematic configuration of a defective portion output device according to an embodiment of the present invention. A defective portion output device 1 is applied to a system for creating mesh data used for a computer aided engineering (CAE) analysis. In the CAE analysis, analysis of structural dynamics, hydrodynamics, or the like is performed on mesh data created by converting design shape data on an object to be analyzed. The design shape data on the object to be analyzed is three-dimensional shape data created by software such as CAD. The mesh data is data created by dividing the three-dimensional shape data into a grid. That is, the mesh data is data in which the design shape of the object to be analyzed is expressed by a mesh. The mesh data includes data on nodes and links constituting the mesh. Each node includes data on a node number and coordinates. The coordinates of the node are coordinates indicating a position of the node in the three-dimensional space. The data on the link is data on a connection relation between the nodes. In each mesh, a plurality of nodes are connected so as to form a triangle or a quadrangle.

The mesh data is converted from the three-dimensional shape data on the object to be analyzed by an existing automatic meshing software function or the like. Conventionally, the mesh data created by the existing automatic meshing software function or the like has a defective portion requiring correction. Therefore, it is necessary for a human to visually check the three-dimensional model based on the mesh data displayed on a display to identify and correct the defective portion, and thus correction cannot be efficiently performed. In the embodiment, the defective portion output device 1 automatically detects and outputs the defective portion in the mesh data, thereby enabling an efficient correction of the mesh data.

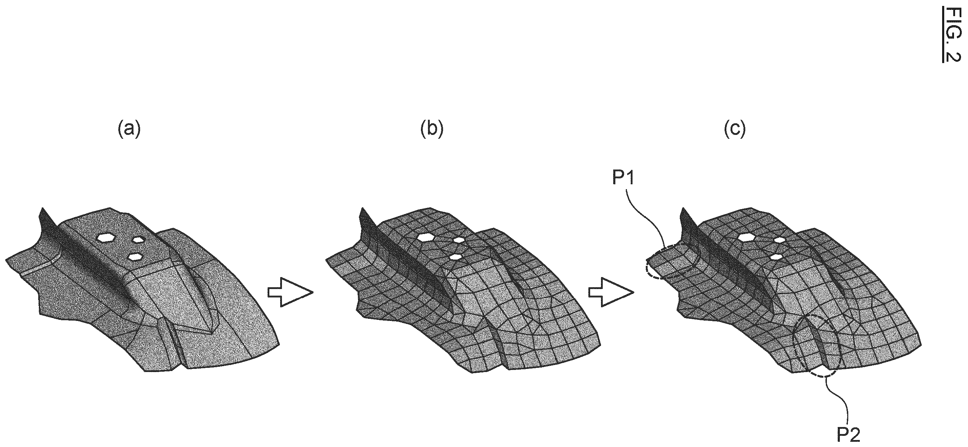

With reference to FIG. 2, an example in which the defective portion output device according to the embodiment is applied will be described. FIG. 2 is a diagram illustrating an example in which the defective portion output device according to the embodiment is applied. FIG. 2(a) illustrates an example of a three-dimensional model based on three-dimensional shape data to be analyzed by CAE. The three-dimensional shape data as shown in FIG. 2(a) is created by software such as CAD. FIG. 2(b) illustrates an example of a three-dimensional model based on mesh data converted from the three-dimensional shape data. The mesh data as shown in FIG. 2(b) is created by the automatic meshing software function or the like. In FIG. 2(c), defective portions P1 and P2 occurring in the three-dimensional model based on the mesh data shown in FIG. 2(b) are shown. The defective portion output device 1 automatically detects defective portions such as the defective portions P1 and P2, and outputs them to an operator.

The defective portions in the mesh data often occur, for example, in analysis of a structure formed by assembling a plurality of components, such as an automobile. Since the structure is formed by assembling, there are many fillets and beads, which causes many defective portions in the mesh data. Examples of the defective portion that occur in the mesh data include a defect in which a portion that is an edge line in the three-dimensional shape data is not an edge line, a defect in which a shape of a portion that is a fillet or a bead in the three-dimensional shape data is broken, and a defect in a merging portion.

The defective portion output device 1 includes a controller 10 and a database 2. The controller 10 includes a computer having hardware and software. The computer includes a ROM that stores a program, a CPU that executes the program stored in the ROM, and a RAM that functions as an accessible storage device. As an operation circuit, an MPU, a DSP, an ASIC, an FPGA, or the like can be used instead of the CPU or together with the CPU.

The controller 10 detects a defective portion by estimating a part or a location with a defective portion in the mesh data using a trained model, and outputs the detected defective portion. The controller 10 is configured to include, as function blocks, a data input unit 11, a feature amount calculation unit 12, a learning unit 13, and an output unit 14, and executes each function through cooperation between software for realizing each of the above-described functions or executing each process, and hardware. In the embodiment, the functions of the controller 10 are divided into four blocks, and the function of each function block will be described. However, the functions of the controller 10 do not necessarily have to be divided into four blocks, and may be divided into three or less function blocks, or five or more function blocks.

The data input unit 11 acquires input data input by the operator. The three-dimensional shape data on the object to be analyzed is input to the data input unit 11 as target three-dimensional shape data. Mesh data corresponding to the target three-dimensional shape data is input to the data input unit 11 as target mesh data. Examples of the three-dimensional shape data include CAD data. The target mesh data is mesh data in which no defective portion has been identified, and is mesh data that is to be subjected to an analysis process. The target mesh data is created by converting the target three-dimensional shape data.

Training data for a machine learning model is input to the data input unit 11. For example, training mesh data is input to the data input unit 11. The training mesh data is mesh data in which a defective portion has already been identified. For example, the training mesh data is mesh data in which a defective portion is visually identified by a human in the past. Three-dimensional shape data corresponding to the training mesh data is input to the data input unit 11 as training three-dimensional shape data.

The training mesh data includes a location with a defective portion in the training mesh data. For example, the training mesh data includes, for each mesh included in the training mesh data, the presence/absence of a defect requiring correction in the mesh. The presence/absence of a defect is expressed by a binary value of 0 or 1. Since a mesh is constituted by a plurality of nodes, a position (coordinates) of a node constituting a mesh with a defect is identified as the defective portion. The training mesh data includes a part with a defective portion in the training mesh data. The part is classified as, for example, a fillet, a bead, no specific part, and the like.

The feature amount calculation unit 12 calculates a feature amount of the mesh data input to the data input unit 11. When the target mesh data is input, the feature amount calculation unit 12 calculates a feature amount of the target mesh data based on nodes and links constituting the target mesh data. For example, the feature amount calculation unit 12 calculates, for each mesh included in the target mesh data, a feature amount of the mesh using the coordinates of the nodes constituting the mesh and the connection relation between the nodes. The feature amount of the mesh is a value quantitatively indicating a feature of the mesh. When the training mesh data is input, the feature amount calculation unit 12 calculates a feature amount of the training mesh data based on nodes and links constituting the training mesh data. For example, the feature amount calculation unit 12 calculates the feature amount of the mesh for each mesh included in the training mesh data.

The feature amount of the mesh includes a feature amount of a mesh surface and a feature amount of a mesh periphery. The feature amount of the mesh surface includes, for example, an attribute value of the mesh surface and a geometric feature amount with another mesh surface. The attribute value of the mesh surface includes an area of the mesh surface, an angle of the mesh surface, and a length of each side of the mesh surface. The angle of the mesh surface is, for example, the maximum angle and the minimum angle of interior angles of the mesh surface. The attribute value of the mesh surface includes a value indicating a shape of the mesh surface. The shape of the mesh surface is either a triangle or a quadrangle. The geometric feature amount with another mesh surface includes an angle between the mesh surface and another mesh surface (dihedral angle), and a distance between the mesh surface and another mesh surface. The feature amount of the mesh periphery includes a geometric feature amount and a statistical feature amount of the mesh periphery. The geometric feature amount of the mesh periphery includes a curvature of the mesh. For example, it is the Gaussian curvature. The statistical feature amount of the mesh periphery includes a density of the nodes constituting the mesh and a histogram of the normal relation of the mesh periphery.

The feature amount calculation unit 12 calculates a feature amount of the three-dimensional shape data input to the data input unit 11. The feature amount of the three-dimensional shape data is a value quantitatively indicating a feature of the three-dimensional shape data. For example, the feature amount of the three-dimensional shape data includes geometric feature amounts of a surface and an edge line included in the three-dimensional shape data. The geometric feature amount of the surface included in the three-dimensional shape data includes an area, an aspect ratio, a volume, and a curvature of the surface. The geometric feature amount of the edge line included in the three-dimensional shape data includes a curvature and a length of the edge line. The feature amount of the three-dimensional shape data includes a geometric feature amount of a structure of the three-dimensional shape data. The geometric feature amount of the structure of the three-dimensional shape data is, for example, a distance of an R-bend included in the three-dimensional shape data. When the target three-dimensional shape data corresponding to the target mesh data is input, the feature amount calculation unit 12 calculates a feature amount of the target three-dimensional shape data. When the training three-dimensional shape data corresponding to the training mesh data is input, the feature amount calculation unit 12 calculates a feature amount of the training three-dimensional shape data.

The feature amount calculation unit 12 calculates a feature amount between the mesh data and the three-dimensional shape data corresponding to the mesh data, which are input to the data input unit 11. The feature amount between the mesh data and the three-dimensional shape data is, for example, a distance between the mesh included in the mesh data and a corresponding portion in the three-dimensional shape data. When the target mesh data and the target three-dimensional shape data are input, the feature amount calculation unit 12 calculates a feature amount between the target mesh data and the target three-dimensional shape data. When the training mesh data and the training three-dimensional shape data are input, the feature amount calculation unit 12 calculates a feature amount between the training mesh data and the training three-dimensional shape data.

The learning unit 13 trains the machine learning model using teaching data to generate a trained model. The trained model is a model trained in advance by machine learning such that appropriate output data can be obtained for certain input data. The teaching data used in the embodiment is teaching data created based on the training mesh data in which a defective portion has already been identified.

The learning unit 13 associates the training mesh data input to the data input unit **11** with the feature amount calculated by the feature amount calculation unit 12 to generate teaching data that associates a location with the defective portion in the training mesh data with the feature amount of the training mesh data when the defective portion occurs in the training mesh data. For example, the learning unit 13 generates the teaching data by associating each node constituting the mesh included in the training mesh data with the feature amount of the mesh. Thus, in the created teaching data, a node constituting a mesh with a defect (a node with a defective portion) in the training mesh data is associated with the feature amount of the mesh. The node (coordinates) with the defective portion corresponds to the location with the defective portion. In the teaching data, a node constituting a mesh without a defect (a node without a defective portion) in the training mesh data is associated with the feature amount of the mesh.

The learning unit 13 trains the machine learning model using the generated teaching data. Specifically, the learning unit 13 trains the machine learning model using the teaching data that associates the location with the defective portion in the training mesh data with the feature amount of the training mesh data when the defective portion occurs in the training mesh data to generate a trained model for estimating the location with the defective portion.

First, the learning unit 13 defines a function indicating an input-output relationship to create a machine learning model. The machine learning model is a neural network having a hierarchical structure constituted by an input layer, an output layer, and at least one intermediate layer each of which includes one or more neurons. The feature amount calculated by the feature amount calculation unit 12 is input to the input layer as input data. For example, the feature amount of each mesh included in the training mesh data is input. As output data corresponding to the input data, the output layer outputs, for each node, whether or not the defective portion is present. That is, for each node, whether or not it is the location with the defective portion is output. Whether or not the defective portion is present is expressed by a binary value of 0 or 1.

Using the machine learning model and the teaching data, the learning unit 13 repeatedly changes a function such that the sum of squares of the error between the output value of the machine learning model (predicted value) and the value given by the teaching data (correct value) is minimized. Specifically, the learning unit 13 calculates, for each node, the error between the predicted value output from the machine learning model based on the input data and the correct value of the teaching data, and repeatedly updates a coupling coefficient (weight) between the respective layers of the neural network such that the sum of squares of the error is minimized, thereby performing learning. When the trained model that has been trained, that is, trained weight data is output, the learning unit 13 stores the trained model in the database 2.

The type of neural network used by the learning unit 13 is not particularly limited. However, since the combinations of numbers become enormous in a normal neural network, a method called a graph convolutional neural network is used in the embodiment. For example, nodes and links constituting the mesh included in the mesh data are used as a graph structure, and in each intermediate layer of the neural network, a calculation of weight is performed using a target node to be a target and a neighboring node located near the target node.

In the embodiment, the teaching data based on the feature amount of the training mesh data is used to train the machine learning model, but the present invention is not limited thereto. In the embodiment, the teaching data used for learning may be teaching data that associates, in addition to the feature amount of the training mesh data, the feature amount of the training three-dimensional shape data and/or the feature amount between the training mesh data and the training three-dimensional shape data with the location with the defective portion in the training mesh data. For example, the learning unit 13 associates the feature amount of the training mesh data and the feature amount between the training mesh data and the training three-dimensional shape data corresponding to the training mesh data when the defective portion occurs in the training mesh data with the location with the defective portion in the training mesh data to generate the teaching data. Then, the learning unit 13 trains the machine learning model using the generated teaching data.

In the embodiment, the teaching data that associates the location with the defective portion in the training mesh data with the feature amount of the training mesh data is used to generate the trained model for estimating the location with the defective portion, but the present invention is not limited thereto. In the embodiment, the teaching data based on the part with the defective portion in the training mesh data is used to generate the trained model for estimating the part with the defective portion. That is, the learning unit 13 associates the part with the defective portion in the training mesh data with the feature amount of the training mesh data when the defective portion occurs in the training mesh data to generate the teaching data. Then, the learning unit 13 trains the machine learning model using the generated teaching data.

The trained model for estimating the part with the defective portion may be generated using teaching data that associates, in addition to the feature amount of the training mesh data, the feature amount of the training three-dimensional shape data and/or the feature amount between the training mesh data and the training three-dimensional shape data with the part with the defective portion in the training mesh data.

The output unit 14 uses the trained model generated by the learning unit 13 to estimate a part or a location with a defective portion in the target mesh data, and outputs the part or the location with the defective portion to the operator. The output unit 14 inputs the feature amount of the target mesh data to the trained model for estimating the part with the defective portion as input data, and outputs the part with the defective portion in the target mesh data from the trained model as output data corresponding to the input data. For example, when the feature amount for each mesh included in the target mesh data is input as input data, the trained model outputs the part with the defective portion in the target mesh data. The part is, for example, any of a fillet, a bead, or no specific part.

The output unit 14 inputs the feature amount of the target mesh data to the trained model for estimating the location with the defective portion as input data, and outputs the location with the defective portion in the target mesh data using the trained model. When the feature amount of the target mesh data is input as input data, the trained model outputs, for each node, whether or not it is the location with the defective portion as output data. The output unit 14 detects the defective portion by estimating the location with the defective portion based on an output result of the trained model. Then, the output unit 14 outputs coordinates of the node estimated to be the location with the defective portion to the operator. In the embodiment, the output unit 14 renders the defective portion on a three-dimensional model based on the target mesh data and displays it on a display. For example, the output unit 14 displays a node with the defective portion in a more emphasized rendering form than a node without the defective portion in the three-dimensional model based on the target mesh data. Examples of the emphasized rendering form include rendering with different colors and rendering with different shapes.

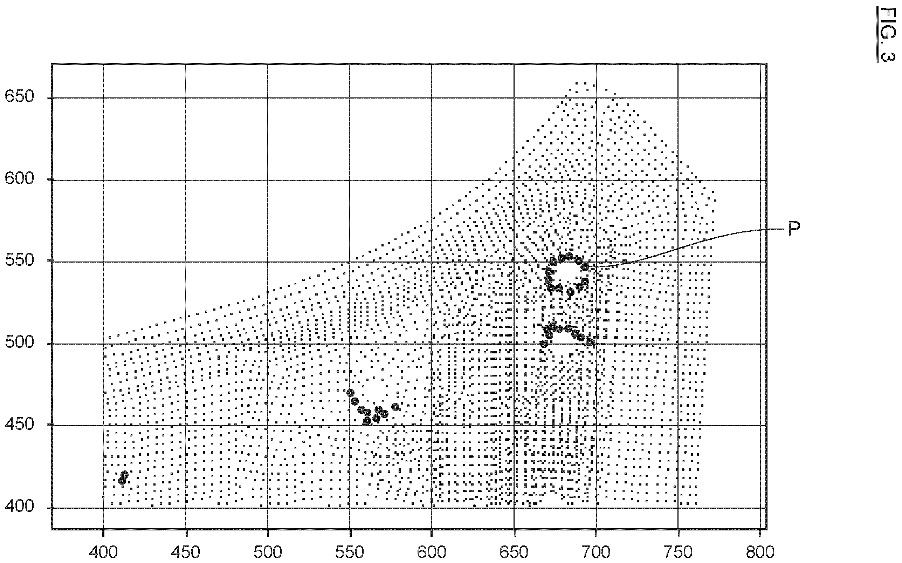

Here, a display example of the output result of the defective portion will be described with reference to FIG. 3. FIG. 3 is a diagram illustrating the display example of the output result of the defective portion according to the embodiment. In FIG. 3, the three-dimensional model based on the target mesh data is rendered and displayed by nodes constituting the target mesh data. In the target mesh data, for example, the node with the defective portion, such as a node P with a defective portion, is displayed in a rendering form different from that of the node without the defective portion.

In the embodiment, the output unit 14 estimates the part or the location with the defective portion in the target mesh data using the trained model with the feature amount of the target mesh data as input data, but the present invention is not limited thereto. The output unit 14 may also estimate the part or the location with the defect in the target mesh data using the trained model with, in addition to the feature amount of the target mesh data, the feature amount of the target three-dimensional shape data and/or the feature amount between the target mesh data and the target three-dimensional shape data as the input data.

In the embodiment, the output unit 14 may first narrow down a candidate region with a defective portion by estimating a candidate part with a defective portion in the target mesh data using the trained model with the feature amount of the target mesh data as input data. Then, after estimating the candidate part, the output unit 14 may estimate the location with the defective portion in the target mesh data with, in addition to the feature amount of the target mesh data in the candidate part, the feature amount of the target three-dimensional shape data and/or the feature amount between the target mesh data and the target three-dimensional shape data in the candidate part as input data.

As described above, in the embodiment, the defective portion in the target mesh data is detected using the machine learning model. This enables a more efficient detection of the defective portion than an algorithm that detects the defective portion by logic based on predetermined rules.

The database 2 stores various types of data. For example, the database 2 stores the trained model. In the embodiment, the database 2 stores a trained model that has been trained to estimate the location with the defective portion and a trained model that has been trained to estimate the part with the defective portion. The database 2 stores the mesh data and the three-dimensional shape data that have been input. The database 2 stores the teaching data for training the machine learning model.

In the embodiment, the database 2 is a database installed in the defective portion output device 1, but the present invention is not limited thereto, and the database 2 may be an external database of the defective portion output device 1.

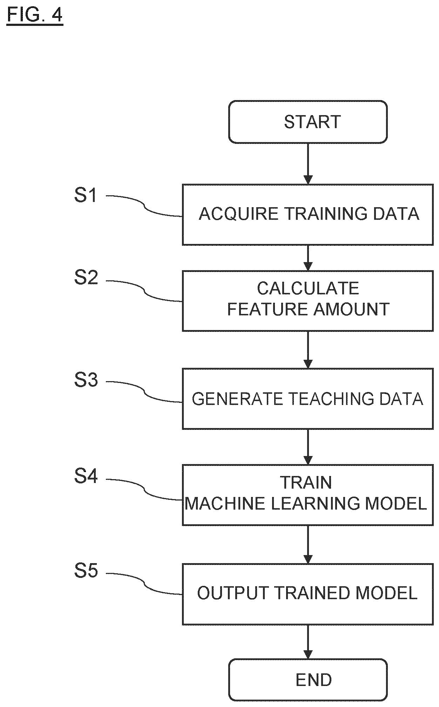

Next, an exemplary procedure for training the machine learning model according to the embodiment will be described with reference to FIG. 4. FIG. 4 is a flowchart illustrating an exemplary procedure of learning of the machine learning model according to the embodiment. In Step S1, the controller 10 acquires the training data that has been input. The training data includes the training mesh data and the training three-dimensional shape data corresponding to the training mesh data. The training mesh data includes data on the part or the location with the defective portion. In Step S2, the controller 10 calculates the feature amount. For example, the controller 10 calculates the feature amount of the training mesh data, the feature amount of the training three-dimensional shape data, and the feature amount between the training mesh data and the training three-dimensional shape data.

In Step S3, the controller 10 generates the teaching data based on the training data acquired in Step S 1 and the feature amount calculated in Step S2. The generated teaching data is teaching data used for machine learning for estimating the part with the defective portion and teaching data used for machine learning for estimating the location with the defective portion. The teaching data used for the machine learning for estimating the part with the defective portion is teaching data that associates the part with the defective portion in the training mesh data with the feature amount of the training mesh data, the feature amount of the training three-dimensional shape data, and the feature amount between the training mesh data and the training three-dimensional shape data when the defective portion occurs in the training mesh data. The teaching data used for the machine learning for estimating the location with the defective portion is teaching data that associates the location with the defective portion in the training mesh data with the feature amount of the training mesh data, the feature amount of the training three-dimensional shape data, and the feature amount between the training mesh data and the training three-dimensional shape data when the defective portion occurs in the training mesh data.

In Step S4, the controller 10 trains the machine learning model using the teaching data generated in Step S3. By machine learning, the controller 10 generates the trained model that has been trained to estimate the location with the defective portion and the trained model that has been trained to estimate the part with the defective portion. In Step S5, the controller 10 outputs the trained model trained in Step S4. In FIG. 4, the feature amount of the training mesh data, the feature amount of the training three-dimensional shape data, and the feature amount between the training mesh data and the training three-dimensional shape data are calculated and used for machine learning, but the present invention is not limited thereto, and only the feature amount of the training mesh data may be calculated and used for machine learning.

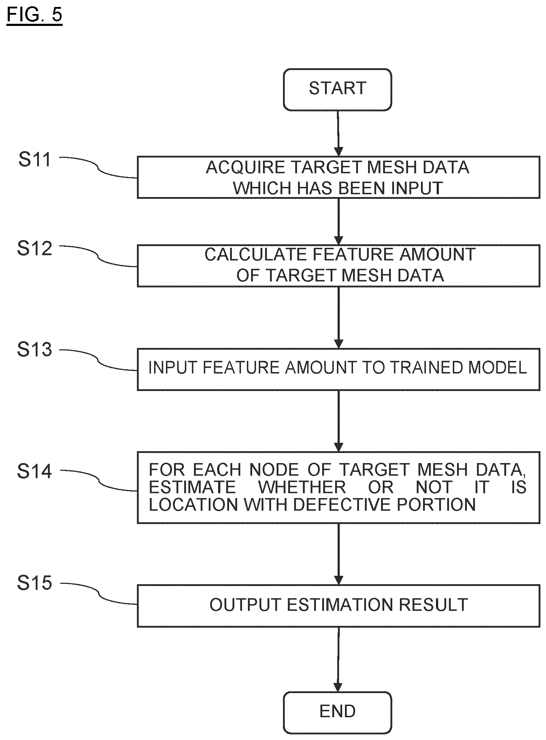

Next, an exemplary procedure of a defective portion output method according to the embodiment will be described with reference to FIG. 5. FIG. 5 is a flowchart illustrating the exemplary procedure of the defective portion output method according to the embodiment. In FIG. 5, the controller 10 outputs the defective portion using the mesh data. In Step S11, the controller 10 acquires the target mesh data that has been input. In Step S12, the controller 10 calculates the feature amount of the target mesh data.

In Step S13, the controller 10 inputs the feature amount calculated in Step S12 to the trained model as input data. The trained model is the trained model trained in FIG. 4, and is, for example, the trained model for estimating the location with the defective portion. In Step S14, the controller 10 estimates, for each node included in the target mesh data, whether or not it is the location with the defective portion using the trained model. In Step S15, the controller 10 outputs an estimation result estimated in Step S14. For example, the controller 10 outputs coordinates of the node estimated to be the location with the defective portion to the operator. In the embodiment, the trained model for estimating the part with the defective portion may be used to estimate the part with the defective portion, and the part with the defective portion may be output to the operator.

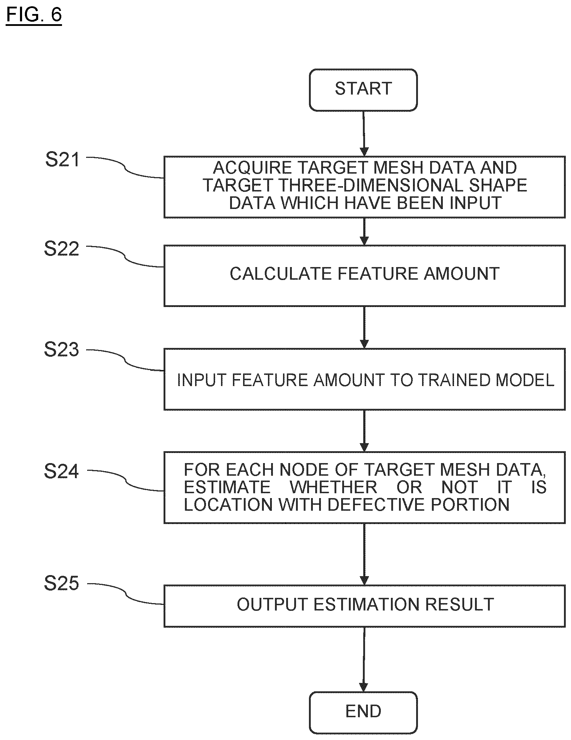

Next, an exemplary procedure of the defective portion output method according to the embodiment will be described with reference to FIG. 6. FIG. 6 is a flowchart illustrating the exemplary procedure of the defective portion output method according to the embodiment. In FIG. 6, the controller 10 outputs the defective portion using the mesh data and the three-dimensional shape data. In Step S21, the controller 10 acquires the target mesh data and the target three-dimensional shape data that have been input. In Step S22, the controller 10 calculates the feature amount based on the input data acquired in Step S21. For example, the controller 10 calculates the feature amount of the target mesh data, the feature amount of the target three-dimensional shape data, and the feature amount between the target mesh data and the target three-dimensional shape data.

In Step S23, the controller 10 inputs the feature amount calculated in Step S22 to the trained model as input data. In Step S24, the controller 10 estimates, for each node of the target mesh data, whether or not it is the location with the defective portion using the trained model. In Step S25, the controller 10 outputs an estimation result estimated in Step S24. For example, the controller 10 outputs the coordinates of the node estimated to be the location with the defective portion to the operator. In the embodiment, the trained model for estimating the part with the defective portion may be used to estimate the part with the defective portion, and the part with the defective portion may be output to the operator.

As described above, in the embodiment, the controller performs: calculating a feature amount of target mesh data to be subjected to an analysis process, which is created by converting three-dimensional shape data, based on nodes and links constituting the target mesh data; inputting the feature amount of the target mesh data to a trained model as input data; and outputting a part or a location with a defective portion requiring correction in the target mesh data using the trained model. The trained model is trained using teaching data that associates a part or a location with a defective portion in training mesh data in which a defective portion has already been identified with a feature amount of the training mesh data when a defective portion occurs in the training mesh data. This allows the three-dimensional model for analysis to be efficiently corrected.

In the embodiment, the controller performs: calculating a feature amount between the target mesh data and target three-dimensional shape data based on nodes and links constituting the target mesh data and the target three-dimensional shape data corresponding to the target mesh data; inputting the feature amount between the target mesh data and the target three-dimensional shape data to the trained model as input data; and outputting a part or a location with a defective portion requiring correction in the target mesh data using the trained model. The trained model is trained using teaching data that associates a part or a location with a defective portion in the training mesh data with a feature amount between the training mesh data and training three-dimensional shape data corresponding to the training mesh data when a defective portion occurs in the training mesh data. This allows the three-dimensional model for analysis to be more accurately and efficiently corrected.

In the embodiment, the controller performs: inputting the feature amount of the target mesh data to the trained model as input data; outputting a candidate part with a defective portion requiring correction in the target mesh data using the trained model; inputting the feature amount of the target mesh data and the feature amount between the target mesh data and the target three-dimensional shape data in the candidate part to the trained model as input data; and outputting a location with a defective portion requiring correction in the target mesh data using the trained model. This allows the three-dimensional model for analysis to be more accurately and efficiently corrected.

In the embodiment, the feature amount of the target mesh data and the feature amount of the training mesh data include a feature amount of a mesh surface and a feature amount of a mesh periphery of a mesh included in each mesh data. This allows detection of the defective portion in the three-dimensional model for analysis using the feature amounts of the mesh surface and the mesh periphery of the mesh included in the three-dimensional model for analysis.

In the embodiment, the feature amount between the target mesh data and the target three-dimensional shape data is a distance between a mesh included in the target mesh data and a corresponding portion in the target three-dimensional shape data. This allows the detection of the defective portion in the three-dimensional model for analysis based on the difference between the mesh data and the design shape data before mesh conversion.

Note that the embodiment described above is described for ease of understanding the present invention, and is not described for limiting the present invention. Accordingly, each component disclosed in the above-described embodiment has a gist including all the design changes and equivalents falling within the technical scope of the present invention.

### Description of Reference Numerals

- 1: Defective portion output device
- 10: Controller
- 11: Data input unit
- 12: Feature amount calculation unit
- 13: Learning unit
- 14: Output unit
- 2: Database

## Claims

1. A defective portion output method for outputting, by a controller, a defective portion in mesh data generated by converting three-dimensional shape data, the defective portion output method comprising, by the controller:
calculating a feature amount of target mesh data to be subjected to an analysis process based on nodes and links constituting the target mesh data;
inputting the feature amount of the target mesh data to a trained model as input data; and
outputting a part or a location with a defective portion requiring correction in the target mesh data using the trained model, wherein
the trained model is trained using teaching data which associates a part or a location with a defective portion in training mesh data in which a defective portion has already been identified with a feature amount of the training mesh data when a defective portion occurs in the training mesh data.

2. The defective portion output method according to claim 1, comprising, by the controller:
calculating a feature amount between the target mesh data and target three-dimensional shape data based on nodes and links constituting the target mesh data and the target three-dimensional shape data corresponding to the target mesh data;
inputting the feature amount between the target mesh data and the target three-dimensional shape data to the trained model as input data; and
outputting a part or a location with a defective portion requiring correction in the target mesh data using the trained model, wherein
the trained model is trained using teaching data which associates a part or a location with a defective portion in the training mesh data with a feature amount between the training mesh data and training three-dimensional shape data corresponding to the training mesh data when a defective portion occurs in the training mesh data.

3. The defective portion output method according to claim 2, comprising, by the controller:
inputting the feature amount of the target mesh data to the trained model as input data;
outputting a candidate part with a defective portion requiring correction in the target mesh data using the trained model;
inputting the feature amount of the target mesh data and the feature amount between the target mesh data and the target three-dimensional shape data in the candidate part to the trained model as input data; and
outputting a location with a defective portion requiring correction in the target mesh data using the trained model.

4. The defective portion output method according to claim 1 or 2, wherein
the feature amount of the target mesh data and the feature amount of the training mesh data include a feature amount of a mesh surface and a feature amount of a mesh periphery of a mesh included in each mesh data.

5. The defective portion output method according to claim 2 or 3, wherein
the feature amount between the target mesh data and the target three-dimensional shape data is a distance between a mesh included in the target mesh data and a corresponding portion in the target three-dimensional shape data.

6. A defective portion output device comprising
a controller for outputting a defective portion in mesh data generated by converting three-dimensional shape data, wherein
the controller performs:
calculating a feature amount of target mesh data to be subjected to an analysis process based on nodes and links constituting the target mesh data;
inputting the feature amount of the target mesh data to a trained model as input data; and
outputting a part or a location with a defective portion requiring correction in the target mesh data using the trained model, wherein
the trained model is trained using teaching data which associates a part or a location with a defective portion in training mesh data in which a defective portion has already been identified with a feature amount of the training mesh data when the defective portion occurs in the training mesh data.
